Europäisches Patentamt

**European Patent Office**

**Office européen des brevets**

(11) Numéro de publication: **0 135 107**
**A1**

(12) **DEMANDE DE BREVET EUROPEEN**

(21) Numéro de dépôt: **84109335.4**

(22) Date de dépôt: **07.08.84**

(51) Int. Cl.⁴: **F 16 L 3/20**
**F 16 F 1/12**

(30) Priorité: **10.08.83 FR 8313156**

(43) Date de publication de la demande:
**27.03.85 Bulletin 85/13**

(84) Etats contractants désignés:
**BE DE FR GB IT NL**

(71) Demandeur: **STEIN INDUSTRIE Société Anonyme dite:**
**19-21, avenue Morane Saulnier**
**F-78140 Velizy Villacoublay(FR)**

(72) Inventeur: **Marsault, Jean-Jacques**
**23, rue des Corps Saints**
**F-78730 Saint Arnoult en Yvelines(FR)**

(72) Inventeur: **Peyrelongue, Jean-Pierre**
**2, Square Francis Jammes**
**F-78760 Pontchartrain(FR)**

(72) Inventeur: **Semedard, Jean-Claude**
**184, avenue de Choisy**
**F-75013 Paris(FR)**

(74) Mandataire: **Weinmiller, Jürgen et al,**
**Zeppelinstrasse 63**
**D-8000 München 80(DE)**

(54) **Dispositif de support et de maintien rigide d'une tuyauterie.**

(57) Dispositif de support et de maintien rigide à distance d'une surface d'appui (16) de portions horizontales d'une tuyauterie (1) soumise à des variations de température importantes entraînant des dilatations thermiques, la distance à la surface d'appui étant imposée par ces dilatations. Il comprend au moins un parallélogramme articulé, dont les deux bras inférieurs (6, 7) sont articulés en croix sur un axe inférieur (30) et reliés chacun a son extrémité inférieure à un point fixe (4, 5) par rapport à la tuyauterie dans le sens axial, les deux points étant sur une même génératrice de la tuyauterie, et les deux bras supérieurs sont articulés sur un axe supérieur (34) maintenu à une distance verticale fixe de la surface d'appui.

FIG.1

0135107

**Dispositif de support et de maintien rigide d'une tuyauterie**

La présente invention concerne un dispositif de support et de maintien rigide à distance d'une surface d'appui de portions horizontales d'une tuyauterie soumise à des variations de températures importantes, entraînant des dilatations thermiques, la distance à la surface d'appui étant imposée par ces dilatations.

On a déjà proposé dans la demande de brevet FR-A-2.512.516 de la demanderesse un dispositif de supportage à ressort à déplacement vertical important pour tuyauterie de masse faible, comprenant un parallélogramme articulé, comportant une première articulation reliée à un point fixe, une deuxième articulation solidaire de la tuyauterie à supporter, à l'opposé et à la verticale de la première, et deux articulations latérales dans un même plan horizontal, les deux bras du parallélogramme passant par la première articulation comportant au-delà de celle-ci des prolongements portant sur un plateau sollicitant le ressort à la compression, la longueur de ces prolongements étant notablement plus faible que celle des côtés du parallélogramme reliant les articulations entre elles.

Un tel dispositif ne convient cependant pas lorsque l'on souhaite qu'une tuyauterie, et notamment une tuyauterie de masse relativement importante, soit supportée rigidement tout en restant susceptible de déplacements verticaux et dans un plan horizontal sous l'effet des dilatations thermiques, et qu'elle présente une résistance suffisante à d'éventuels séismes.

La présente invention a pour but de procurer un dispositif de maintien des portions horizontales de telles tuyauteries, qui s'adapte aux dilatations thermiques de leurs parties verticales ou obliques dans une gamme de niveaux très large, tout en présentant une forte rigidité, et qui puisse résister aux variations de poids de la tuyauterie dues à sa mise en charge ou à sa vidange, et à des accélérations dues à des séismes.

Le dispositif selon l'invention est caractérisé en ce qu'il comprend au moins un parallélogramme articulé, dont les deux bras inférieurs sont articulés en croix sur un axe inférieur et reliés chacun à son extrémité inférieure à un point fixe par rapport à la

- 2 -

0135107

tuyauterie dans le sens axial, les deux points étant sur une même génératrice de la tuyauterie, et les deux bras supérieurs sont articulés sur un axe supérieur maintenu à une distance verticale fixe de la surface d'appui.

Il répond en outre de préférence à au moins l'une des caractéristiques suivantes :

- Ses deux axes inférieur et supérieur sont reliés par un ressort.

- Le ressort est taré pour que les forces verticales s'exerçant sur le dispositif s'équilibrent lorsque la tuyauterie est dans ses conditions de fonctionnement nominal.

- Les points fixes par rapport à la tuyauterie des bras inférieurs sont disposés chacun sur un collier lié axialement à la tuyauterie mais permettant sa dilatation radiale.

- Il comprend deux parallélogrammes articulés symétriques par rapport au plan diamétral vertical de la tuyauterie.

- Les points fixes par rapport à la tuyauterie sont dans son plan diamétral horizontal.

Il est décrit ci-après, à titre d'exemple et en référence aux figures du dessin annexé, un dispositif de maintien rigide d'un élément horizontal d'une tuyauterie de transport de sodium liquide pour centrale nucléaire à neutrons rapides, selon l'invention :

La figure 1 représente le dispositif en élévation vu de côté.

La figure 2 représente le même dispositif en élévation vu dans l'axe de la tuyauterie, depuis la gauche de la figure 1.

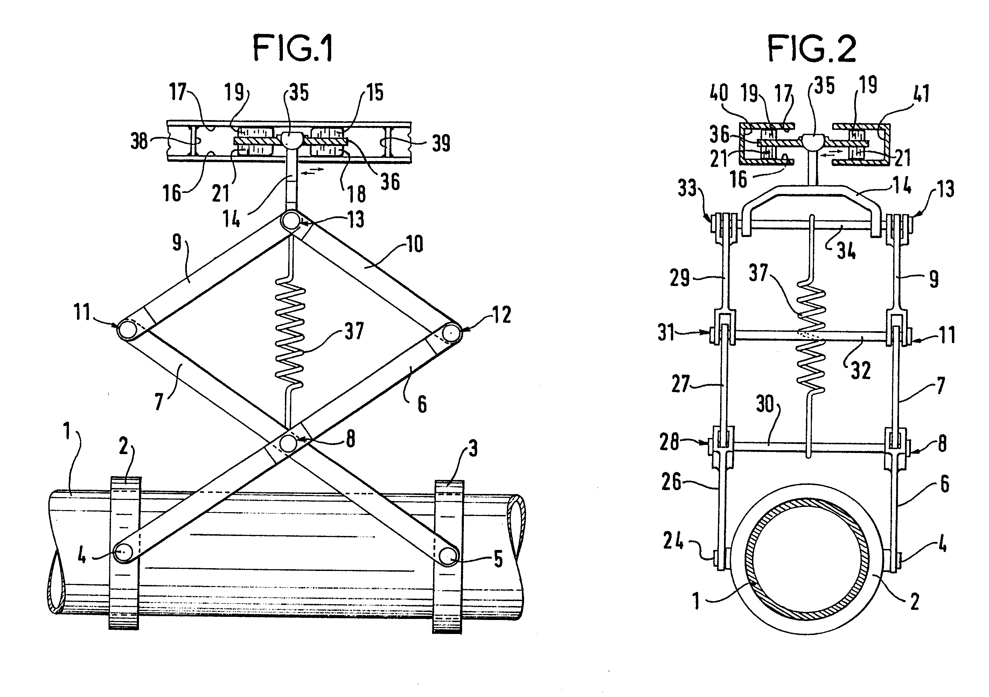

La tuyauterie 1, munie d'un calorifuge (non représenté) comporte deux colliers 2, 3, qui lui sont liés axialement, mais permettent sa dilatation radiale. On peut utiliser notamment à cet effet les colliers ayant fait l'objet de la demande de brevet FR-A-2499 202 du 3 février 1981 de la Demanderesse. Ceux-ci sont reliés par des articulations, disposées de préférence dans leur partie externe au calorifuge, aux bras inférieurs 6, 7, 26, 27 du dispositif de suspension. On voit sur la figure 1 les articulations 4 et 5 sur l'un des côtés de la tuyauterie, et sur la figure 2 l'articulation 24 symétrique de l'articulation 4. Les bras 6 et 7, du côté de la tuyauterie visible sur la figure 1, et 26 et 27 symétriques des premiers, sont articulés aux

- 3 -

0135107

points 8 et 28, reliés par l'axe 30.

Les bras 6 et 7 sont articulés aux points 11 et 12, visibles sur la figure 1, aux bras supérieurs 9 et 10. Les bras 26 et 27 sont également articulés de façon symétrique, l'articulation 31 du bras 27 avec le bras supérieur 29 étant seule visible sur la figure 2. Les articulations 11 et 31 sont reliées par l'axe 32. L'ensemble des bras et des articulations forme un pantographe.

Les bras supérieurs 9 et 10 sont articulés au point 13 entre eux et sur une poutrelle du support 14. De la même manière, le bras supérieur 29 est articulé au point 33 sur l'autre bras supérieur, non visible, et sur la poutrelle de support 14. Les articulations 13 et 33 sont reliées par l'axe 34.

La position des articulations 4 et 5 sur la tuyauterie, les longueurs des bras inférieurs 6, 7, 26, 27 et la position sur ceux-ci de l'axe d'articulation 30 sont calculés de façon que les déplacements verticaux de l'élément horizontal de tuyauterie résultant de sa liaison avec le pantographe soient égaux à ceux résultant de la dilatation thermique des parties verticales (ou éventuellement obliques) de la tuyauterie .

La poutrelle 14 est suspendue par sa tête 35 à un plateau 36 pouvant glisser horizontalement sur une surface de support 16, par l'intermédiaire de patins 15, 18, et 19, 21 entre la surface 16 et une surface supérieure de guidage 17, ces déplacements étant cependant limités à des valeurs maximales par des butées 38, 39 et 40, 41 selon la direction parallèle à l'axe de la tuyauterie et selon la direction perpendiculaire.

Par ailleurs, afin de diminuer les efforts dans les tiges lorsque la tuyauterie est pleine, le dispositif de support est muni d'un ressort de traction 37, reliant les axes 30 et 34. Ce ressort est taré de façon que les forces verticales s'exerçant sur la tuyauterie s'équilibrent lorsque l'installation est dans ses conditions de fonctionnement nominal (tuyauterie remplie de sodium liquide à la température correspondant au fonctionnement nominal de l'installation d'échange de chaleur associée à la centrale nucléaire à neutrons rapides).

Bien que le dispositif qui vient d'être décrit en référence aux figures paraisse la forme de réalisation préférable de l'invention, on comprendra que diverses modifications peuvent lui être apportées sans sortir du cadre de l'invention, certains de ses organes pouvant être remplacés par d'autres qui joueraient un rôle technique analogue. En particulier, on pourrait ne disposer qu'un seul parallélogramme à bras articulés, qui serait alors lié à des articulations disposées sur la génératrice supérieure de la tuyauterie. On pourrait supprimer le ressort de traction, si les efforts engendrés lorsque la tuyauterie est pleine restaient limités.On pourrait adapter un organe mobile sur la surface d'appui autre qu'un plateau, par exemple une poulie pouvant rouler sur un chemin de roulement, ou bien relier la poutrelle à un point fixe, ce qui impliquerait cependant une certaine rotation de la tuyauterie autour de celui-ci.

REVENDICATIONS

1/ Dispositif de support et de maintien rigide à distance d'une surface d'appui (16) de portions horizontales d'une tuyauterie (1) soumise à des variations de température importantes entraînant des dilatations thermiques, la distance à la surface d'appui étant imposée par ces dilatations, caractérisé en ce qu'il comprend au moins un parallélogramme articulé, dont les deux bras inférieurs (6, 7) sont articulés en croix sur un axe inférieur (30) et reliés chacun a son extrémité inférieure à un point fixe (4, 5) par rapport à la tuyauterie dans le sens axial, les deux points étant sur une même génératrice de la tuyauterie, et les deux bras supérieurs sont articulés sur un axe supérieur (34) maintenu à une distance verticale fixe de la surface d'appui.

2/ Dispositif selon la revendication 1, caractérisé en ce que les deux axes inférieur et supérieur sont reliés par un ressort (37).

3/ Dispositif selon la revendication 2, caractérisé en ce que le ressort de traction est taré pour que les forces verticales s'exerçant sur le dispositif s'équilibrent lorsque la tuyauterie est dans ses conditions de fonctionnement nominal.

4/ Dispositif selon l'une des revendications 1 à 3, caractérisé en ce que les points (4, 5) fixes par rapport à la tuyauterie des bras inférieurs sont disposés chacun sur un collier (2, 3) lié axialement à la tuyauterie, mais permettant sa dilatation radiale.

5/ Dispositif selon l'une des revendications 1 à 4, caractérisé en ce qu'il comprend deux parallélogrammes articulés symétriques par rapport au plan diamétral vertical de la tuyauterie.

6/ Dispositif selon la revendication 5, caractérisé en ce que les points (4, 5) fixes par rapport à la tuyauterie sont dans son plan diamétral horizontal.

# FIG.1

# FIG.2

0135107

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl ³) |
|---|---|---|---|
| Y | DE-C- 682 666 (ALLGEMEINE ROHRLEITUNG AG et al.) <br> * figure unique * | 1,5,6 | F 16 L 3/20 <br> F 16 F 1/12 |
| Y | US-A-3 118 643 (L.S. SUOZZO) <br> * figures 1,2 * | 1,5,6 | |
| A | GB-A- 771 251 (C.C. PALMER) <br> * figures 1,2 * | 1,2 | |
| A | EP-A-0 074 060 (J. PERRIER) <br> * figure 1 * & FR - A - 2 512 516 (Cat. D) | 1 | |
| A | US-A-1 893 295 (A.R. LE BAILLY) <br> * figure 1 * | 1,2 | |

DOMAINES TECHNIQUES RECHERCHES (Int. Cl. ³)

F 16 L
F 16 F

Le présent rapport de recherche a été établi pour toutes les revendications

| Lieu de la recherche | Date d'achèvement de la recherche | Examinateur |
|---|---|---|
| LA HAYE | 07-09-1984 | ANGIUS P. |